Europäisches Patentamt

European Patent Office

Office européen des brevets

(19)

(11) Publication number: **0 111 907 B1**

## (12) EUROPEAN PATENT SPECIFICATION

(45) Date of publication of patent specification: **28.10.87**

(21) Application number: **83112659.4**

(22) Date of filing: **15.12.83**

(51) Int. Cl.⁴: **G 02 F 1/13,** G 02 F 1/137, B 60 R 1/08

(54) **Non-glaring type reflector.**

(30) Priority: **16.12.82 JP 220787/82**

(43) Date of publication of application:
**27.06.84 Bulletin 84/26**

(45) Publication of the grant of the patent:
**28.10.87 Bulletin 87/44**

(84) Designated Contracting States:
**DE FR GB**

(56) References cited:
**DE-A-2 604 462**
**FR-A-2 381 644**
**FR-A-2 399 680**
**US-A-4 139 273**

**SID INTERNATIONAL SYMPOSIUM DIGEST OF TECHNICAL PAPERS, 1st edition, May 1979, pages 122-123, published by Lewis Winner, Coral Gables, USA; T. UENO et al.: "Reflective and positive mode color LCD using cholesteric-nematic phase change type guest host effect"**

(73) Proprietor: **NIPPONDENSO CO., LTD.**
**1, 1-chome, Showa-cho**
**Kariya-shi Aichi-ken (JP)**

(72) Inventor: **Itoh, Hiroshi**
**1-5 Nadaka Yokone-cho**
**Ohbu-shi Aichi-ken (JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

Courier Press, Leamington Spa, England.

# Description

The present invention relates to an anti-glare mirror according to the preamble of claim 1.

An anti-glare mirror varying the reflectance electrically has been conventionally known. Such a mirror is provided with a liquid crystal layer on a mirror reflection surface and the voltage is applied to this liquid crystal layer to control the molecular axis orientation. Thereby the transmittance or absorption of the light passing through the liquid crystal layer and the luminous flux reflected by the mirror reflection surface can be controlled. And such types of liquid crystal have been used as n-type nematic liquid crystal which cause dynamic scattering, twist-nematic liquid crystal which controls polarization of light, and guest-host type liquid crystal.

However, the conventional mirrors which use the aforementioned types of liquid crystal have the following disadvantages.

Firstly, the non-glaring type reflector employing a dynamic scattering effect has such a drawback that the image thereof looks slightly blurred on the non-glaring operation, because of the light scattering in liquid crystal caused by the applied voltage.

Secondly, a polarizer or analyzer must be used for the reflector employing twist-nematic or guest-host type liquid crystal to control the polarization of light. Therefore the light polarized in only one direction is reflected so that the image is dark even when no non-glaring operation is needed. Also a distorted image is shown, depending on the angle of the driver's eyes to the mirror surface. The visual angle of the image recognized by the driver is narrow because of the effect of the polarizer.

An anti-glare mirror, which overcomes the above mentioned problems in using a polarizer or analyzer, is known from DE—A 26 04 462.

This anti-glare mirror is provided with a nematic liquid crystal layer including a liquid crystal host material and a dichroic dye. The liquid crystal layer is disposed between two electrode films and the molecular axis orientation thereof is controlled by means of an applied voltage or electric field. The dye absorbs light passing in parallel to the longitudinal axis of the dye molecules in slight degree and absorbs light passing perpendicular to said axis in strong degree. The anti-glare mirror is operated in a field-effect mode.

It is an object of the present invention to provide an anti-glare mirror with a different reflection-control-operation providing a clear and dark image which is not blurred during the non-glaring operation.

According to the invention this object is achieved by the measures specified in claim 1.

An anti-glare mirror according to the invention comprising a nematic liquid crystal layer between two electrode films which vary the molecular axis orientation of the liquid crystals by means of an applied voltage, a transparent substrate placed on the side of incidence of the light of said liquid crystal layer, a substrate placed on the other side of said liquid crystal layer including a reflection layer, wherein said liquid crystal layer includes a liquid crystal host material and a dichroic dye and is in a transparent state caused by a uniform orientation of the molecular axes when no electric field is applied, is characterized in that the liquid crystal layer exhibits dynamic scattering when the voltage is applied.

Advantageous embodiments of the invention are subject-matters of the subclaims.

The invention will be described in further detail with reference to the accompanying drawings, in which:

Fig. 1 is a cross-sectional view showing the structure of an embodiment of an anti-glare mirror according to the present invention.

Fig. 2 is a cross-sectional view showing the structure of the embodiment of Fig. 1, but showing the non-glaring operating state.

Fig. 3 is an explanatory view showing the mounting state when the anti-glare mirror of the embodiment is used for a room mirror in an automobile.

Fig. 4 is a circuit diagram of controlling circuit to control the reflectance of the anti-glare mirror of the present invention.

The anti-glare mirror according to the preferred embodiment is mainly used for a back mirror of a vehicle such as an automobile. It effectively protects the driver from dazzling caused by the light reflection, such as head lamps of a following car at night or sunlight from behind.

The available kinds of liquid crystal for the present anti-glare mirror, are nematic liquid crystals. Generally, n-type nematic liquid crystal is used to cause dynamic scattering by supplying current through the electrode films on the both sides of the liquid crystal layer.

The electrode film disposed at the both end surfaces of the liquid crystal layer is subjected to surface processing to orient molecules of the liquid crystal in one direction. This causes the liquid crystal layer to be transparent with no electric field, because the liquid crystal matrix is a homogeneous configuration or homeotropic configuration and the dichroic dye follows the same configuration. To this liquid crystal layer, an electric field is applied above a certain threshold so that the liquid crystal starts dynamic scattering. Thereby, its configuration becomes irregular and the light passing through the liquid crystal layer is scattered by the liquid crystal matrix. The scattered light is absorbed by the dichroic dye so that the light passing through the liquid crystal layer, is decreased and accordingly the light reflected on the mirror reflection layer is also decreased.

Therefore, the total reflectance at the front surface is lowered resulting in a non-glaring effect.

The dichroic dye used in the present invention has an optical anisotropy. Therefore, the absorption spectrum is different between to the linearly polarized light parallel to the molecular axis (i.e. optical axis) and to the linearly polarized light transverse to the molecular axis. The light absorption coefficient within a determined spectrum range can be controlled by controlling the molecular axis orientation of such a dye with an optical anisotropy.

The dichroic dye is preferred to amount to 0.3—3 wt% of the liquid crystal layer having a dynamic scattering effect.

The preferred embodiment of the invention will be described in the following.

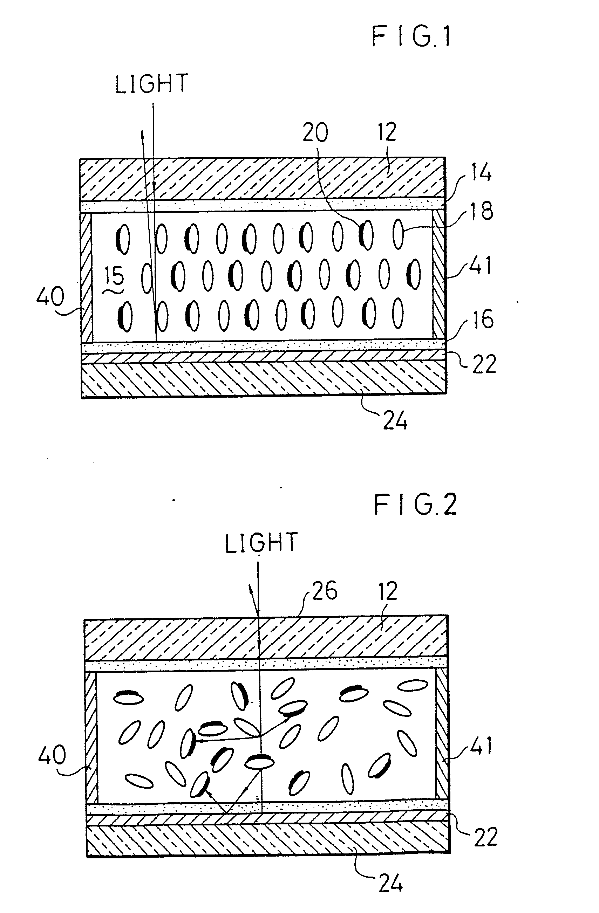

Fig. 1 is a cross-sectional view showing the structure of an embodiment of an anti-glare mirror. A transparent substrate 12 made of glass is disposed at the incident side.

Inside of this transparent substrate 12, a transparent electrode film 14 is vapor deposited in a 40—100 nm thick layer by sputtering, which is made of indium tin oxide. The inner surface of the transparent electrode film 14 is subjected to a surface proccessing by applying octadecyl triethoxy silane. Thus the molecular axis of the liquid crystal is oriented in homeotropic configuration. On the other substrate 24 made of glass, aluminium in a 50 nm thick layer is vapor deposited by sputtering to form a mirror reflection surface 22. On the mirror reflection surface 22, the aforesaid transparent electrode film 16 is vapor deposited in a 40—100 nm thick layer, which is made of indium tin oxide. The surface of the transparent electrode film is subjected to a surface processing similarly as described before.

At each peripheral end of the both substrates 12, 24, parallel spacer 40, 41, made of plastics are attached to define the space wherein the liquid crystal is disposed. Thus, the liquid crystal layer 15 is disposed at the space between the both transparent electrode film 14, 16. The liquid crystal layer 15 is composed of the dichroic dye 20 for 1% by weight and n-type nematic liquid crystal for the balance. For the dichroic dye 20, such blue dye as "D5" produced by BDH Co. and "G—168" produced by Nihon Kanko Shikiso KK. can be used. For the nematic liquid crystal, MBBA (N-(P-methoxybenzylidene)—P'-butylaniline) is used.

The anti-glare mirror of such construction is produced as described in the following.

On one surface of the transparent substrate 12, indium tin oxide is sputtered to form a transparent electrode layer. Aluminium is sputtered on one surface of the other transparent substrate 24, to form a mirror reflection layer 16.

Each surface of the transparent electrode layer 14, 16 are subjected to a surface processing to orient liquid crystal in one direction. These substrates are formed to a parallel plate condenser. The three peripheral side surfaces thereof are fixed at the spacers 40, 41. Then the substrates shaped in the condenser is put into a vacuum equipment to make its inner space vacuum. An open side thereof is immersed into a liquid crystal mixed with the dichroic dye, thereafter the liquid crystal is made to permeate into the space between the both substrate by applying air pressure.

Next, the operation of the present anti-glare mirror according to the present invention will be explained.

As shown in Fig. 1, the n-type nematic liquid crystal and the dichroic dye are both in the homeotropic configuration, when no electric field is applied. In this case the incident light from the transparent substrate 12 is not absorbed in the liquid crystal layer, because any polarization of light is directed vertically to the molecular axis of both liquid crystal matrix and dye. Accordingly, the incident light passes through the liquid crystal layer 15 and the transparent electrode layer 16, and is reflected by the mirror reflection layer 22. Then the reflected light passes along the same course to come out of the transparent glass substrate 12. When no electric field is applied the incident light is not absorbed nor scattered in the liquid crystal layer. Therefore, the total reflectance of the anti-glare mirror is high so that the bright and clear image can be obtained.

When a voltage above a certain threshold is applied to the both electrode films, the n-type nematic liquid crystal is made to cause the dynamic scattering mode, as shown in Fig. 2. In the dynamic scattering mode, the molecular axis orientation of the nematic liquid crystal is a random, and that of the dichroic dye follows to be at random. Therefore, the incident light from the transparent substrate 12 is scattered by the liquid crystal layer. The scattered light is absorbed by the dichroic dye. In result, the luminous flux reaching the mirror reflection layer 22 is decreased, which causes the reduction of the reflected light coming out of the transparent substrate 12 on the front surface of the anti-glare mirror. When 100% of the incident light passing through the liquid crystal layer is absorbed by the dichroic dye, only the light reflected by the incident surface 26 on the front transparent substrate 12 is the reflected light of the anti-glare mirror. Thus, a clear image can be obtained, lowering its brightness. The background of the reflector is not blurred as the conventional one, but it can be darkened as a whole. The light absorption by the liquid crystal layer can be gradually controlled, by successively controlling the voltage to cause the dynamic scattering mode. Consequently, the reflectance of the anti-glare mirror can be gradually varied by changing the applied voltage.

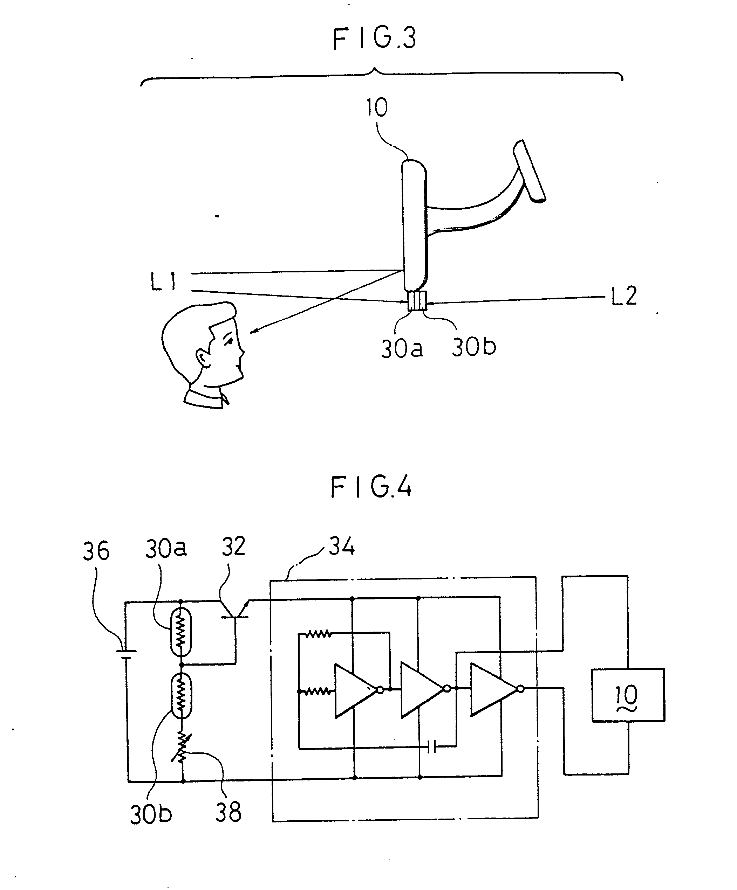

Fig. 3 is an explanatary view showing the mounting state of the aforesaid anti-glare mirror used for a room mirror in an automobile. A room mirror 10 includes anti-glare mirror and photoconductive devices 30a, 30b disposed at the lower part thereof. The photoconductive devices are made of photodiode, phototransistor, CdS and the like.

Fig. 4 shows an embodiment of a control circuit. The controller operates to measure the forward brightness and the backward brightness of the mirror and to apply the voltage to the liquid crystal only when the backward brightness is higher, thereby causing the non-glaring effect. The anode of a mounted battery 36 is connected to the collector of a switching transistor 32. The emitter of the switching transistor 32 is connected to the power supply terminal of an inverter forming an oscillator 34. Thus the alternating voltage is applied to the both ends of the liquid crystal layer to cause the non-glaring effect. Between the collector and the base of the transistor 32, the photoconductive device 30a made of CdS is disposed to measure the backward brightness. Between the base and the earth of the transistor 32, are disposed the photoconductive device 30B made of CdS to measure the forward brightness, and a series resistor 38. When the forward light L2 is brighter than the backward light L1, the photoconductive device 30b shows a higher conductivity than that of the photoconductive device 30a and the resistance of the photoconductive device 30a is higher than that of the photoconductive device 30b.

Thereby the transistor is in "OFF" mode so that the oscillator 34 is not operated. Accordingly non-glaring operation is not utilized. In this case, as the forward light is brighter, the driver is used to the forward brightness and is not dazzled with the backward light.

Reversely, when the backward light L1 is brighter than the forward light L2, the resistance of the photoconductive device 30a is lower than that of the photoconductive device 30b. Thereby the base voltage of the transistor 32 increases to turn on the transistor 32. Thus, the power is supplied to the oscillator 34 from the mounted battery 36 to generate oscillating volatage. By applying this oscillating voltage to the liquid crystal layer of the anti-glare mirror, the reflectance is decreased resulting in a non-glaring effect. By varying the value of the resistor 38, the threshold to turn on the transistor 32 can be varied.

The reflectance at the front surface 26, when 100% of the incident light is absorbed in the liquid crystal layer in order to cause the non-glaring effect, can be varied as follows. It can be controlled by coating the incident surface of the transparent substrate 12 in a certain thickness with such transparent films as $MgF_2$, $ZnS$, $TiO_2$, which have different dielectric constants from that of the substrate.

The reflectance can be also controlled in response to the intensity of the incident light, by controlling the applied electric field strength in proportion to the intensity of the incident light.

In the aforementioned embodiment, the transparent electrode film 16 and the mirror reflection surface 22 are separately formed, but the transparent electrode film and the mirror reflection surface may be combined. The mirror reflection surface may be placed at the opposite surface on the transparent substrate 24 to the transparent electrode layer 16.

In effect, the present invention controls the reflectance at the front surface of the anti-glare mirror which employs the dichroic dye mixed into the liquid crystal matrix. The dichroic dye acts to absorb the scattered light in the liquid crystal layer to decrease the reflection of the dazzling light. The reflectance is increased by making the orientation of liquid crystal layers including the dichroic dye not to absorb the light according to the optical anisotropy.

Accordingly, the present invention can provide such effect that the image is very clear because it is not blurred, but only darkened by the dichroic dye absorbing the scattered light. Also if there is no dazzling light, the image is bright, not distorted, and the visual angle thereof is wide because a polarizer is not used.

**Claims**

1. An anti-glare mirror comprising:
a nematic liquid crystal layer (15) between two electrode films (14, 16) which vary the molecular axis orientation of the liquid crystals by means of an applied voltage,
a transparent substrate (12) placed on the side of incidence of the light of said liquid crystal layer,
a substrate (24) placed on the other side of said liquid crystal layer including a reflection layer (22), wherein
said liquid crystal layer includes a liquid crystal host material and a dichroic dye and is in a transparent state caused by a uniform orientation of the molecular axes when no electric field is applied, characterised in that the liquid crystal layer exhibits dynamic scattering when the voltage is applied.

2. An anti-glare mirror according to claim 1, wherein said dichroic dye amounts to 0,3—3 weight % of the liquid crystal layer.

3. An anti-glare mirror according to one of the preceding claims, wherein said reflection layer (22) of said substrate (24) is identical with said electrode film (16).

**Patentansprüche**

1. Nichtblendender Spiegel, mit
einer nematischen Flüssigkristall-Schict (15) zwischen zwei Elektrodenfilmen (14, 15), die die Molekularachsen-Orientierung der Flüssigkristalle mittels einer angelegten Spannung verändern,
einem transparenten Substrat (12), das auf der Lichteintrittsseite der Flüssigkristall-Schicht angeordnet ist,
einem auf der anderen Seite der Flüssigkristall-Schicht angeordneten Substrat (24) mit einer Reflexionsschicht (22).
wobei die Flüssigkristall-Schicht ein Flüssigkristall-Grundmaterial und einen dichroitischen Farbstoff umfaßt und sich aufgrund einer gleichförmigen Orientierung der Molekularachsen in einem transparenten Zustand befindet, wenn kein electrisches Feld anliegt,
dadurch gekennzeichnet, daß die Flüssigkristall-Schicht eine dynamische Streuung aufweist, wenn die Spannung angelegt ist.

2. Nichtblendender Spiegel nach Anspruch 1, dadurch gekennzeichnet, daß der dichroitische Farbstoff etwa 0,3 bis 3 Gew.-% der Flüssigkristall-Schicht ausmacht.

3. Nichtblendender Spiegel nach einem der vorhergehenden Ansprüche, dadurch gekennzeichnet, daß die Reflexionsschicht (22) des Substrats (24) mit dem Elektrodenfilm (16) identisch ist.

**Revendications**

1. Réflecteur non éblouissant, comprenant:
une couche (15) de cristaux liquides nématiques entre deux films électrodes (14, 16) qui font varier l'orientation des axes moléculaires des cristaux liquides par l'application d'une tension,
un substrat transparent (12), placé sur la face de ladite couche de cristaux liquides sur laquelle la lumière est incidente,
un substrat (24), placé sur l'autre face de ladite couche de cristaux liquides et présentant une couche réflectrice (22), dans lequel

ladite couche de cristaux liquides renferme une substancehôte à cristaux liquides et un colorant dichroîque, et est dans une condition transparent due à une orientation uniforme des axes moléculaires lorsque aucun champ électrique n'est appliqué, caractérisé par le fait que la couche de cristaux liquides présente une dispersion dynamique lorsque la tension est appliquée.

2. Réflecteur non éblouissant selon la revendication 1, dans lequel ledit colorant dichroïque représente 0.3—3% en poids de la couche de cristaux liquides.

3. Réflecteur non éblouissant selon l'une des revendications précédentes,
dans lequel ladite couche réflectrice (22) dudit substrat (24) est identique audit film électrode (16).

F I G.1

LIGHT

F I G.2

LIGHT

## F I G.3

## F I G.4

2